Europäisches Patentamt

European Patent Office

Office européen des brevets

(11) Publication number: **0 122 875**
A1

# (12) EUROPEAN PATENT APPLICATION

(21) Application number: **84810099.6**

(22) Date of filing: **29.02.84**

(51) Int. Cl.³: **H 05 B 7/101**
**H 05 B 7/085**

(30) Priority: **22.03.83 CH 1545/83**

(43) Date of publication of application:
**24.10.84 Bulletin 84/43**

(84) Designated Contracting States:
**AT BE CH DE FR GB IT LI LU NL SE**

(71) Applicant: **Arc Technologies Systems, Ltd.**
**Box 61**
**Georgetown Grand Cayman(KY)**

(72) Inventor: **Conradty, Claudio, Dipl.-Ing.**
**Grünthal 2**
**D-8505 Röthenbach/Pegnitz(DE)**

(72) Inventor: **Zöllner, Dieter, Dr.**
**Händelstrasse 19**
**D-8501 Schwaig/Nürnberg(DE)**

(72) Inventor: **Lauterbach-Dammler, Inge, Dr.**
**Peter Vischer Strasse 15**
**D-8500 Nürnberg(DE)**

(72) Inventor: **Taube, Thomas, Dr.**
**Im Wolfsgarten 11**
**D-8520 Erlangen-Steudach(DE)**

(74) Representative: **Kügele, Bernhard**
**c/o ELTECH SYSTEMS CORPORATION 17-19, Chemin du**
**Champ-d'Anier**
**CH-1209 Le Petit-Saconnex Genève(CH)**

(54) Electrode for electric arc furnaces.

(57) An electrode for electric arc furnaces, comrpising a water-cooled metallic electrode holder (1) and a consumable section (3) connected to the electrode holder by means of a threaded nipple (2) the electrode holder having a protective jacket made up of rings (4, 5, 10, 20). Between the consumable section (3) and the electrode holder (1) there is a disk (11, 19) which, in the event of a fracture of the consumable section (3), remains attached to the electrode holder (1), thus protecting it against the electric arc. The disk (11, 19) may be attached to the electrode holder (1) in various ways. E.g., the lowest ring (10, 20) of the protective jacket may have the form of a sleeve nut, its bottom being represented by the disk (11, 19) which lies between the electrode holder (1) and the consumable section (3), or the electrode holder (1) may have thorns (23) which enter the disk (11) when the consumable section is screwed on, thus retaining said disk (11). The sleeve nut shaped protective member may constitute one solid piece or consist of two separate parts.

FIG.1

EP 0 122 875 A1

## ELECTRODE FOR ELECTRIC ARC FURNACES

### FIELD OF THE INVENTION

The invention relates to an electrode for arc furnaces, comprising an upper, metallic, water-cooled electrode holder, being surrounded by a protective jacket which is resistant to temperature variations and mechanical stress, and a consumable section which is connected to the electrode holder by means of a threaded nipple.

### BACKGROUND OF THE INVENTION

On account of various unfavourable developments in the mineral oil sector and in the steel industry itself, great efforts have been undertaken in recent years to utilize water-cooled combination electrodes for industrial purposes.

Compared to uncooled electrodes, the most important advantage offered by water-cooled electrodes is that the consumption of electrode graphite is considerably reduced, which constitutes an attractive improvement for electric steel works, not only on account of excessive increases in price of raw materials and a desirable reduction of steel production costs in general, but also because of potential savings in energy consumption.

Considering the applicant's own developments, which are described in detail in the European patent specifications 50682, 50683 or 51074, continuous further development efforts are certainly desirable.

The above publications describe combination electrodes which comprise a water cooled metallic electrode holder which is surrounded by temperature resistant rings, protecting the electrode holder against the furnace atmosphere. The consumable section of graphite is connected to the electrode holder at its lower end by means of a threaded nipple. The lower front plate of the electrode holder is covered by the upper front face of the consumable section and is therefore not exposed to hazardous conditions or attack by an electric arc during normal operation.

If the furnace is operated in an inadequate or inconsiderate manner or if the scrap material is very heavy, the consumable sections may occasionally break. In this case the unprotected lower front plate of the electric holder will be exposed to high temperatures and to the electric arc, which may lead to a damage of the metal section.

## OBJECT OF THE INVENTION

The object of the present invention is, therefore, to develop a reliable combination electrode as described in the preamble with good emergency properties. A second object is to reduce repair work after a break-off of the consumable section.

According to the invention, this problem is solved by means of a disk being arranged between the electrode holder and the consumable section, said disk covering the lower front plate of the electrode holder, to which it is connected, said disk consisting of a material of good conductivity which is resistant to thermal and mechanical stress, said disk having a central opening the diameter of which corresponds essentially to the diameter of the threaded nipple.

Within the framework of the invention, the disk may be attached to the electrode holder in a plurality of ways. The disk which is located between the electrode holder and the consumable section, may be combined to one solid protective member with the lowest ring of a plurality of rings, constituting the protective jacket. This protective member has the form of a sleeve nut, with the cylindrical part being screwed on the electrode holder covering its lower front plate.

The protective member may alternatively consist of two separate parts which are connected in a positive manner. In this way it is possible to avoid unfavourable mechanical prestress. Moreover, the two parts may consist of different materials which are ideally suited for their individual application.

Another possibility of connecting the disk to the electrode holder is to use an electrode holder whose lower front plate has pointed thorns which enter the disk when the disk is pressed against the electrode holder to be retained in such a manner that it may be removed from the electrode holder only by force.

If the two latter types of fastening are used, the disk may be surrounded on the outside by the protective jacket, which protrudes beyond the face of the electrode holder, thus protecting it against the attack of the furnace atmosphere.

## BRIEF DESCRIPTION OF THE DRAWINGS

The invention is illustrated in the accompanying drawings in which,

Figure 1    shows a partly sectional view of an electric arc
            electrode according to the invention,

Figure 2    shows another embodiment of the invention, with
            essential details being illustrated in an
            enlarged manner,

Figures 3a and 3b   show various embodiments of the
                    protective members in accordance with
                    the invention,

Figure 4    shows a further embodiment of the invention, and

Figure 5    shows still a further embodiment of the
            invention.

## DETAILED DESCRIPTION OF THE DRAWINGS

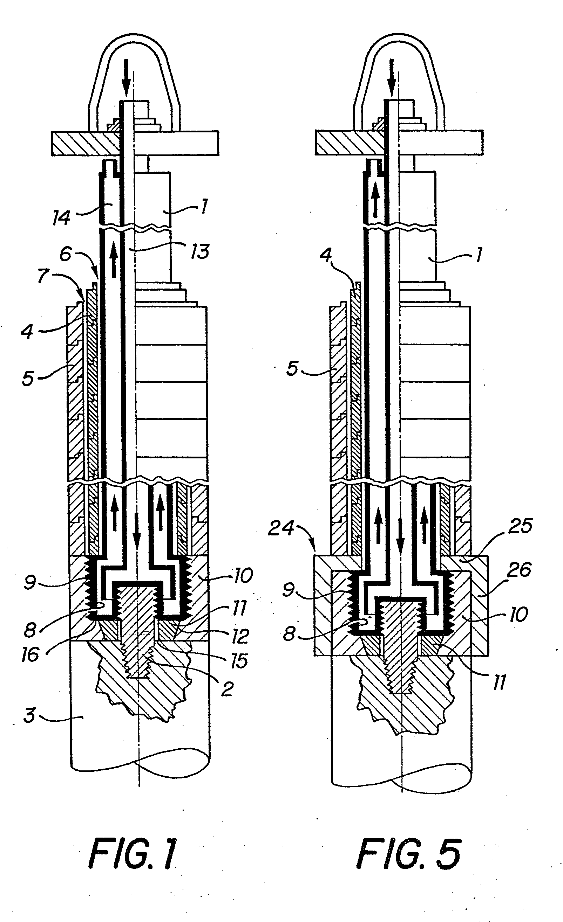

Figure 1 shows an electric arc electrode which comprises
an upper, metallic electrode holder 1 and a consumable
section 3 connected to the electrode holder by means of a
threaded nipple 2. Over a considerable part of its total
length being referred to as its protected section, the
metallic ·electrode holder is surrounded by protective
rings of a high-temperature resistant material.

In the sectional illustration of the rings on the left
side of the drawing the protective jacket discloses two
hollow cylinders which are composed of rings 4 being
arranged around the metallic electrode holder with
sufficient clearance 6 and of rings 5 being arranged
around the rings 4 also with clearance 7, thus forming a
double protective jacket. The inner rings 4 may consist of
a ceramic or electrically conductive material.
Alternatively, the inner hollow cylinder may consist of a
steel tube which snugly fits to the metallic electrode
holder 1.

The rings 5 consist of graphite or of a mixture of graphite and a ceramic component. In case of such a mixture there must be sufficient graphite to make sure that the material cannot be wetted by slag.

This is a requirement which has to be met by the outside surface of the protective jacket during the entire period of operation. If a material is used which can be wetted by slag, the diameter of the electrode will increase as a result of slag deposits on the outside, which means that after a relatively short time the electrode cannot be removed any more through the roof opening and the support arm of the electrode.

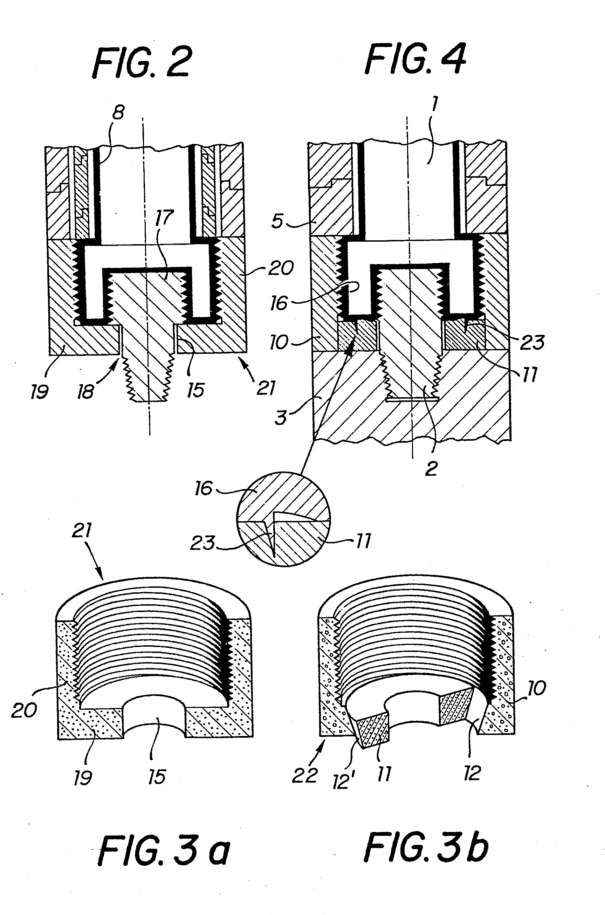

The electrode holder comprises a lower section 8 having a larger diameter than the protected section, the lower section comprising a male thread 9. The lower front plate 16 of the electrode holder comprises a tapped hole into which the threaded nipple 2 is screwed. The lower section 8 is surrounded by a ring 10 which is screwed thereon by means of a female thread. The ring 10 is positively connected with a disk 11, which is shown in detail in Figure 3b, wherein each of the disk 11 and the ring 10 has a cone 12'' or 12' respectively, by means of which they are connected to each other in a positive manner, forming together a protective member of the shape of a sleeve nut.

Alternatively, it is of course possible to combine the ring and the disk to one solid protective member which facilitates handling and assembly. Such a one-piece protective member is illustrated in Figure 3a, which shows a protective member 21 consisting of a ring 20 with an internal thread and an internal disk 19 with a central opening 15 for the passage of the threaded nipple.

In Figure 1 the nipple 2 comprises a lower part having a conical thread, by means of which the consumable section 3, which has a corresponding thread box, is screwed to the electrode holder 1.

The purpose of the arrangement of a graphite disk 11 or 19 in the connection zone between electrode holder and consumable section in accordance with the invention is to make ensure that, if the nipple or the nipple box break, which results in a break-off of the consumable section, the lower front plate 16 of the electrode holder remains protected by this disk against an attack of the electric arc.

As can be seen from Figure 1, the cooling water passes via a central duct 13 to a lower section 8 of the electrode holder, where it alters the direction of flow, rising again through an outer ring space 14. If the electric arc were directly placed on the metallic electrode holder after a break-off of the consumable section, water would leak immediately, which must be avoided.

When two-part protective members 22 are employed, a further possibility is to use different materials which are ideally suited for the different applications to which the parts are subjected. The ring-shaped part, which on its outside is exposed to the furnace atmosphere and, occasionally, to the electric arc as well as to splashes of slag, may consist of a mixture of graphite and a ceramic component, provided that the surface maintains its non-wettability for slag. The disk-shaped part of the protective member, which, primarily should have a good electric conductivity and needs only limited protective properties which have to last only for a short time in case of failure, consists of pure, high quality graphite.

The central opening 15 of the disk 11 illustrated in Figure 1 has a diameter which is essentially equal to the diameter of the threaded nipple in the plane of the disk. The reason for this is that, if the consumable section breaks off, the gap between the remainder of the nipple and the disk will be as small as possible or completely non-existent to prevent the electric arc from hitting the lower front plate.

In this context, Figure 2 shows in a schematic manner an embodiment of a disk 19 and a nipple which guarantee a good protection in case the fabrication tolerances are very big and would result in a gap 18. The cylindrical part 17 of the threaded nipple has a diameter which is somewhat larger than the diameter of the central bore 15 of the disk 19, thus completely closing the central bore 15. If the consumable section breaks, it will thus be impossible for the electric arc to attack the lower section 8 of the metallic electrode holder which eliminates the danger to damage the electrode holder.

Between its two threaded parts the nipples 2 or 17 as shown in Figure 1 and 2 respectively, have threadless zones which correspond to the thickness of the disk 11 and 19.

Figure 4 shows another embodiment of the invention which features an electrode holder 1, which, for the sake of simplicity, is surrounded by only one layer of rings 5. The lowest ring 10 protrudes beyond the lower front plate 16 of the electrode holder by an amount essentially corresponding to the thickness of the disk 11, which is arranged within the ring 10 in such a manner that it covers the electrode holder 1 from below.

The disk 11 is fastened by means of thorns 23 which project from the lower front plate 16 of the electrode holder, as shown on the enlarged detail.

When the consumable section 3 is screwed on by means of the threaded nipple 2, the disk 11 is presses upwards in such a manner that the thorns 23 penetrate the disk, thus creating a mechanically firm connection. As illustrated, the thorns may be formed directly out of the front plate or they may be inserted into the front plate by means of threads or the like.

Figure 5 shows a further embodiment of the invention which is illustrated together with an arc furnace electrode according to Figure 1.

A covering member 24 of essentially the same shape as the protective member consisting of the ring 10 and the disk 11, but being composed of one solid piece is arranged upside down surrounding the protective member.

The horizontal disk-like portion 25 of the covering member 24 covers the ring 10 from the top and abuts at the same time on a shoulder of the electrode holder which is formed between the protected section and the lower section of the electrode holder. The rings 4 and 5 of the protective jacket abut on the disk-like portion 25.

The portion 26 encircles the ring 10 and protects it against the furnace interior.

This embodiment may comprise a protective member composed of one piece or of two pieces as illustrated in Figure 3a and 3b, because it is not important anymore that the ring 10 be of a material other than that of the disk 11 in order to better withstand oxidation, so both parts may be of the same material and combined to one piece, but still the effect of lowering the mechanical stress may be important enough in some cases to choose a two piece composite protective member.

## CLAIMS

1. An electrode for arc furnaces, comprising an upper, metallic, water-cooled electrode holder, which is surrounded by a protective jacket being resistant to temperature variations and mechanical stress and a consumable section, which is connected to the electrode holder by means of a threaded nipple, characterized in a disk (11, 19) being arranged between the electrode holder (1) and the consumable section (3), said disk covering a lower front plate (16) of the electrode holder to which it is connected, said disk consisting of a material of good conductivity which is resistant to thermal and mechanical stress, said disk having a central opening (15) the diameter of which essentially corresponds to the diameter of the threaded nipple (2).

2. The electrode of claim 1, characterized in said protective jacket consisting of rings (4, 5, 20), the lowest ring (20) and the disk (19) constituting one solid protective member (21) of the shape of a sleeve nut.

3. The electrode of claim 1, characterized in said protective jacket consisting of rings (4, 5, 10) with the lowest ring (10) and the disk (11) being connected in a positive manner to form a composite protective member (22) in the shape of a sleeve nut.

4. The electrode of claim 3, characterized said ring (10) and disk (11) consisting of different materials, with said ring (10) consisting of a mixture of graphite and a ceramic component which is resistant to oxidation, and said disk (11) consisting of highly conductive,

- 12 -

0122875

pure graphite.

5. The electrode of claim 1, characterized in said protective jacket comprising two hollow cylinders, one being arranged inside the other, with at least one cylinder consisting of rings, the inner hollow cylinder consisting of a ceramic material and the outer hollow cylinder consisting of a mixture of graphite and a ceramic component.

6. The electrode of claim 1, characterized in said lower front plate (16) of the electrode holder (1) having tapered thorns (23) for the attachment of the disk (11), said thorns protruding from the lower front plate (16) of the electrode holder (1) either vertically or obliquely against the screw-in direction of the consumable section (3).

7. The electrode of claim 6, characterized in the outer diameter of the disk (11) being essentially equal to the inner diameter of the lowest ring (10) from a plurality of rings (4, 5, 10) making up the protective jacket.

8. The electrode of claim 7, characterized in the outer surface area of the disk (11) being surrounded by the protective jacket, which extends beyond the lower front plate (16) of the electrode holder (1).

9. The electrode of claim 1, characterized in said protective jacket comprising two hollow cylinders one of which being arranged inside the other, with at least one hollow cylinder consisting of rings, the inner hollow cylinder consisting of an electrically conductive material and the outer hollow cylinder of a mixture of graphite and a ceramic component.

10. The electrode of claim 5 or 9, characterized in the inner hollow cylinder comprising a metal cylinder.

11. The electrode of claim 2 or 3, characterized in said protective member 21, 22) being covered by a covering member (24) of essentially the same shape as said protective member (22), the covering member being arranged upside down surrounding the protective member, the inner diameter of the covering member being essentially equal to the outer diameter of said protective member.

0122875

FIG.1          FIG. 5

0122875

FIG. 2      FIG. 4

FIG. 3 a      FIG. 3 b

# EUROPEAN SEARCH REPORT

| | DOCUMENTS CONSIDERED TO BE RELEVANT | | EP 84810099.6 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| D,A | EP - A1 - 0 050 682 (C. CONRADTY NÜRNBERG GMBH) <br><br> * Fig. 1; page 3, line 9 - page 10, line 21 * <br><br> -- | 1,3-5, 9 | H 05 B 7/101 <br> H 05 B 7/085 |
| A | GB - A - 2 087 699 (LEYBOLD-HERA-EUS GMBH) <br><br> * Fig. 1; page 3, line 18 - page 4, line 7 * <br><br> -- | 1 | |
| A | US - A - 4 287 381 (MONTGOMERY) <br><br> * Fig. 1; column 2, line 54 - column 4, line 10 * <br><br> ---- | 1 | |

TECHNICAL FIELDS
SEARCHED (Int. Cl. ³)

H 05 B 7/00

The present search report has been drawn up for all claims

| Place of search | Date of completion of the search | Examiner |
|---|---|---|
| VIENNA | 30-06-1984 | TSILIDIS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82